Europäisches Patentamt

**European Patent Office**

Office européen des brevets

(11) Veröffentlichungsnummer: **0 195 392 B1**

(12) **EUROPÄISCHE PATENTSCHRIFT**

(45) Veröffentlichungstag der Patentschrift: **22.07.92**

(21) Anmeldenummer: **86103513.7**

(22) Anmeldetag: **15.03.86**

(51) Int. Cl.⁵: **H04N 3/233**

(54) **Horizontal-Ablenkschaltung.**

(30) Priorität: **21.03.85 DE 3510138**

(43) Veröffentlichungstag der Anmeldung:
**24.09.86 Patentblatt 86/39**

(45) Bekanntmachung des Hinweises auf die
Patenterteilung:
**22.07.92 Patentblatt 92/30**

(84) Benannte Vertragsstaaten:
**BE DE FR GB IT NL**

(56) Entgegenhaltungen:
**DE-A- 2 228 194**
**US-A- 4 282 460**
**US-A- 4 298 829**

**PATENT ABSTRACT OF JAPAN, Band 8, Nr.
39 (E-228)[1476], 21. Februar 1984; & JP - A -
58 196 768 (NIPPON DENKI K.K.) 16.11.1983**

(73) Patentinhaber: **Nokia (Deutschland) GmbH
Östliche Karl-Friedrich-Strasse 132
W-7530 Pforzheim(DE)**

(72) Erfinder: **Reh, Klaus
Panoramastrasse 18
W-7321 Albershausen(DE)**

## Beschreibung

Die Erfindung bezieht sich auf eine Horizontal-Ablenkschaltung gemäß dem Oberbegriff des Anspruchs 1.

Aus der DE-PS 31 26 791 ist eine Ablenkschaltung mit Rasterkorrektur für Kathodenstrahlröhren bekannt. Bei dieser Ablenkschaltung wird zeitweise eine zweite Spannungsquelle an den Ablenkgenerator der Ablenkschaltung angekoppelt, die eine Rasterkorrektur bewirkt. Die Ankopplung der zweiten Spannungsquelle ist steuerbar und die Steuerung erfolgt über einen von einer vertikalfrequenten Spannung beeinflußten Impulsbreitenmodulator. Damit soll eine Verzeichnung in Ost/West-Richtung auf der Kathodenstrahlröhre beseitigt werden.

Der Erfindung liegt die Aufgabe zugrunde, eine Horizontal-Ablenkschaltung mit Rasterkorrektur für eine Kathodenstrahlröhre anzugeben, die einen einfacheren Schaltungsaufbau hat.

Die Lösung dieser Aufgabe erfolgt mit den im Anspruch 1 angegebenen Mitteln. Vorteilhafte Ausgestaltungen der Erfindung sind in den Unteransprüchen 2 bis 3 enthalten.

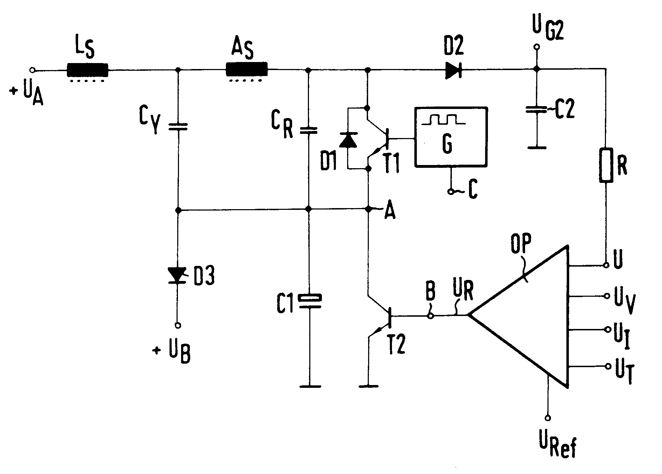

Die Erfindung wird nun anhand von einem in der Figur gezeigten Ausführungsbeispiel näher erläutert. In der Figur ist schematisch der Stromlaufplan einer Horizontal-Ablenkschaltung dargestellt.

Parallel zu der Reihenschaltung aus der Ablenkspule AS und dem Hinlaufkondensator $C_Y$ sind der Rücklaufkondensator $C_R$ und der Zweirichtungsschalter, bestehend aus einem NPN-Transistor T1 und einer Diode D1, angeordnet. An den Verbindungspunkt der Ablenkspule AS mit dem Hinlaufkondensator $C_Y$ ist eine Ladespule LS angeschlossen, deren anderer Anschluß mit der positiven Betriebsspannung $+U_A$ verbunden ist . Die Basis des Transistors T1 ist mit einem Oszillator G verbunden, der eine horizontalfrequente Spannung erzeugt. Diese horizontalfrequente Spannung wird über eine an der Klemme C anliegende Synchronspannung synchronisiert.

Der Verbindungspunkt des Hinlaufkondensators $C_Y$ mit dem Rücklaufkondensator $C_R$ und mit dem Zweirichtungsschalter ist als Fußpunkt A bezeichnet. Dieser Fußpunkt A ist über einen NPN-Transistor T2 mit dem Nullpotential verbunden. Vom Fußpunkt A ist weiterhin ein Kondensator C1 mit dem Nullpotential verbunden. Durch diesen Kondensator C1 liegt der Fußpunkt A wechselspannungsmäßig direkt auf dem Nullpotential, während sein Gleichspannungsniveau durch den Transistor T2 beeinflußt wird. Hierzu ist die Basis des Transistors T2 mit dem Ausgang B eines Regelverstärkers OP verbunden. Die vom Regelverstärker OP erzeugte Regelspannung $U_R$ steuert den Transistor T2 derart, daß die gewünschte Rasterkorrektur und Bildbreite erreicht wird.

Zur Erzeugung der Regelspannung $U_R$ sind an den Regelverstärker OP folgende Spannungen angelegt:
- die Referenzspannung $U_{Ref}$,
- eine aus den Rücklaufimpulsen gewonnene Gleichspannung U,
- eine vertikalfrequente Spannung $U_V$,
- eine dem Strahlstrom der Kathodenstrahlröhre entsprechende Spannung $U_I$ und
- eine von der Betriebsspannung der Tonstufe abhängige Spannung $U_T$.

Die vertikalfrequente Spannung $U_V$ wird an den Regelverstärker OP angelegt, um wie üblich die 0/W-Verzeichnung auszugleichen. Die bei sich änderndem Strahlstrom auftretende Bildbreitenänderung wird durch die Spannung $U_I$ vermieden. Bei Tonstufen mit großer Leistung können Lautstärkespitzen zu einer derartigen Belastung der Betriebsspannung $+U_A$ führen, daß eine Bildbreitenänderung auftritt. Deswegen ist die Spannung $U_T$ an den Regelverstärker angeschaltet, die diesen Änderungen entgegenwirkt.

Die Gewinnung der Spannungen $U_V$, $U_I$ und $U_T$ ist nicht im einzelnen dargestellt, während die Erzeugung der Spannung U nachfolgend beschrieben ist.

An den Verbindungspunkt der Ablenkspule AS mit dem Rücklaufkondensator $C_R$ ist die Anode der Diode D2 angeschlossen, deren Kathode mit einem gegen Nullpotential geschalteten Kondensator C2 verbunden ist. Mit der Diode D2 und dem Kondensator C2 wird aus den an der Ablenkspule AS vorhandenen Rücklaufimpulsen eine Gleichspannung gewonnen, die zum einen als Spannung $U_{G2}$ für das zweite Gitter der Kathodenstrahlröhre dient und die zum anderen über den Widerstand R als Spannung U an den Regelverstärker OP gelegt ist. Die Höhe der Rücklaufimpulse an der Ablenkspule AS entspricht der Bildbreite des mit der Kathodenstrahlröhre dargestellten Bildes. Entsprechend ist die Spannung U am Regelverstärker OP der Istwert der Bildbreite und aus dem Vergleich mit der Referenzspannung $U_{Ref}$ wird im Regelverstärker die Regelspannung $U_R$ gewonnen. Hieraus ist ersichtlich, daß für die Bildbreitenstabilisierung ein geschlossener Regelkreis vorhanden ist. Die weiteren am Regelverstärker OP anliegenden Spannungen $U_V$, $U_I$ und $U_T$ steuern die Horizontalablenkung derart, daß eine konstante Bildbreite erhalten bleibt.

Um für den Transistor T2 eine einfache Type verwenden zu können, ist an den Fußpunkt A mit ihrer Anode eine Diode D3 angeschaltet, deren Kathode mit einer positiven Spannung $+U_B$ verbunden ist. Diese positive Spannung $+U_B$ kann beispielsweise 17 Volt betragen. Wenn nun durch einen Fehler im Oszillator G oder durch einen Fehler in den mit dem Fußpunkt A verbundenen Bauteilen die Spannung am Fußpunkt A über die an der Kathode der Diode D3 liegenden positiven Spannung plus der Durchlaßspannung der Diode D3 ansteigt, dann wird die Diode D3 leitend und bewahrt damit den Transistor T2 und den Kondensator C1 vor einer unzulässig hohen Spannung.

**Patentansprüche**

1. Horizontal-Ablenkschaltung mit Rasterkorrektur für eine Kathodenstrahlröhre, bestehend aus der Parallelschaltung einer in Reihe mit einem Hinlaufkondensator ($C_Y$) liegenden Ablenkspule ($A_S$) mit einem Rücklaufkondensator ($C_R$) und mit einem zwei Richtungschalter (T1, D1), der von einem Oszilator (G) gesteuert wird, **dadurch gekennzeichnet,** daß der Hinlaufkondensator ($C_Y$), der Rücklaufkondensator ($C_R$) und der Zweirichtungsschalter (T1, D1) gemeinsam (Fußpunkt A) über einen von einer Regelspannung ($U_R$) für die Bildbreite und die Rasterkorrektur gesteuerten Transistor (T2) mit Nullpotential verbunden sind, wobei die Basis des Transistors (T2) mit dem Ausgang (B) eines Regelverstärkers (OP) verbunden ist, an dem eine Referenzspannung ($U_{Ref}$), eine aus den an der verbindungsstelle der Ablenkspule ($A_S$), des Rücklaufkondensators ($C_R$) und des Zweirichtungsschalters (T1, D1) abgegriffenen Rücklaufimpulsen gewonnene Gleichspannung (U) sowie eine vertikalfrequente ($U_V$), eine dem Strahlstrom der Kathodenstrahlrohre entsprechende ($U_I$) und eine von der Betriebsspannung der Tonstufe abhängige ($U_T$) Spannung zur Rasterkorrektur anliegen.

2. Horizontal-Ablenkschaltung nach Anspruch 1, dadurch gekennzeichnet, daß parallel zum Transistor (T2) ein Kondensator (C1) angeordnet ist.

3. Horizontal-Ablenkschaltung nach Anspruch 2, dadurch gekennzeichnet, daß an den gemeinsamen Fußpunkt (A) eine Diode (D3) mit ihrer Anode angeschaltet ist, deren Kathode mit einer positiven Spannung ( + $U_B$) verbunden ist.

**Claims**

1. A horizontal deflection circuit with grid correction for a cathode ray tube, consisting of the parallel circuit of a deflection coil ($A_S$) arranged in series with a forward sweep condenser ($C_Y$) with a return sweep (flyback) condenser ($C_R$) and a bidirectional switch (T1, D1) controlled by an oscillator, **characterized in that** the forward sweep condenser ($C_Y$), the return sweep condenser ($C_R$) and the bidirectional switch (T1, D1) are jointly connected (at the low end A) to zero potential via a transistor (T2) controlled by a control voltage ($U_R$) for picture width and grid correction, where the base of the transistor (T2) is connected to the output (B) of a control amplifier (OP). Applied to the said control amplifier (OP) there is a reference voltage ($U_{Ref}$), a direct current voltage (U) obtained from the return sweep pulses monitored at the interconnection point between the backward sweep pulses monitored at the interface of the deflection coil ($A_S$), the backwards sweep condenser ($C_R$) and the bidirectional switch (T1, D1), as well as a vertical frequency voltage (U), a voltage ($U_I$) that corresponds to the beam current of the cathode beam tube and a voltage ($U_T$) for grid correction that depends on the operating voltage of the sound interval.

2. A horizontal deflection circuit in accordance with Claim 2, **characterized in that** a condenser (C1) is arranged in parallel with the transistor (T2).

3. A horizontal deflection circuit in accordance with Claim 2, **characterized in that** a diode (D3) is connected to the common low end (A), while the cathode of the said diode is connected to a positive voltage ( + $U_B$).

**Revendications**

1. Circuit de déviation horizontal avec correction de trame pour une tube à rayon cathodique, comprenant le montage en parallèle d'une bobine de déviation (Ag) en série avec un condensateur aller (Cy) avec un condensateur de retour ($C_R$) et avec un comutateur bi-directionnel (T1, D1) commandé par un oscillateur (G), caractérisé en ce que le condensateur aller (Cy), le condensateur de retour ($C_R$) et le commutateur bi-directionnel (T1, D1) sont reliés en commun (base A) avec le potentiel zéro à travers un transistor (T2) commandé par une tension de réglage pour la largeur d'image et la correction de trame, la base du transistor (T2) étant reliée avec la sortie (B) d'un amplificateur de réglage (OP) sur lequel sont appliquées une tension de référence ($U_{réf.}$), une tension continue obtenue des impulsions de retour prélevées sur le point de jonction de la bobine de déflexion ($A_S$), du condensateur de retour ($C_R$) et du commutateur bi-directinnel (T1, D1) ainsi qu'une fréquente verticale ($U_V$) et une tension ($U_I$) correspondant au courant de faisceau du tube cathodique et une tension assujettie à la tension de service du niveau sonore (U$_T$) pour la correction de trame.

2. Circuit de déviation horizontal selon la revendication 2, caractérisé en ce que un condensateur (C1) est disposé en parallèle au transistor (T2).

3. Circuit de déviation horizontal selon la revendication 2, caractérisé en ce que une diode (D3) avec son anode, dont la cathode est reliée à une tension positive ( + U$_3$), est branchée sur la base commune (A).